(19) Europäisches Patentamt

European Patent Office

Office européen des brevets

(11) **EP 1 185 386 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **00930972.5**

(22) Anmeldetag: **08.06.2000**

(51) Int Cl.7: **B21C 37/28**, B21D 7/025

(86) Internationale Anmeldenummer:
**PCT/CZ00/00040**

(87) Internationale Veröffentlichungsnummer:
**WO 00/074871 (14.12.2000 Gazette 2000/50)**

(54) **HERSTELLUNGSVERFAHREN VON ROHRBÖGEN AUS GERADEN SPIRALFÖRMIG GESCHWEISSTEN ROHREN**

METHOD FOR PRODUCING PIPE BENDS FROM SPIRALLY WELDED, STRAIGHT PIPES

PROCEDE DE PRODUCTION DE TUYAUX COUDES A PARTIR DE TUYAUX DROITS A SOUDAGE SPIRALE

(84) Benannte Vertragsstaaten:
**AT DE GB**

(30) Priorität: **08.06.1999 CZ 204199**

(43) Veröffentlichungstag der Anmeldung:
**13.03.2002 Patentblatt 2002/11**

(73) Patentinhaber: **Jinpo Plus A.S.**
**702 00 Ostrava-Privoz (CZ)**

(72) Erfinder:
• **FOLDYNA, Václav**
**705 00 Ostrava (CZ)**
• **Parizek, Frantisek**
**155 00 Praha 5 (CZ)**
• **PETROS, Kamil**
**705 00 Ostrava (CZ)**

• **HELIS, Oldrich**
**742 82 Jistebnik (CZ)**
• **KÜBEL, Zdenek**
**742 58 Pribor (CZ)**
• **MILATA, Antonin;**
**700 30 Ostrava (CZ)**
• **SYKORA, Pavel**
**704 00 Ostrava (CZ)**
• **KOUKAL, Jaroslav**
**716 00 Ostrava (CZ)**

(74) Vertreter: **Heger, Georg, Dipl.-Ing., Dr. et al**
**Sonn & Partner Patentanwälte,**
**Riemergasse 14**
**1010 Wien (AT)**

(56) Entgegenhaltungen:
EP-A- 0 586 703      GB-A- 2 144 148
US-A- 3 973 999

**Beschreibung**

Die Erfindung betrifft ein Hestellungsverfahren für Rohrbögen aus geraden, spiralförmig geschweißten Stahlrohren, hauptsächlich für Erdgasfernleitungen, die in der Elektroinduktionsbiegemaschine mit Wasserbrause zum entsprechenden Bogen mit dem geforderten Biegeradius gebogen werden. Derartige Rohrbögen müssen im Betrieb einen Innenüberdruck des beförderten Mediums von bis zu 40 Bar aushalten.

Rohrbögen für Gasleitungen, für die man Stahlrohre mit Nenndurchmessern von 300 bis 700 mm benutzt, werden bisher durch Biegen gerader, nahtloser Rohre in der Elektroinduktionsbiegemaschine bei einer Verformungstemperatur über $A_{C1}$ des Rohrgrundmateriales hergestellt. Derartig gefertigte Rohrbögen erfüllen sämtlichen an sie gestellten Festigkeitsforderungen, aber der Nachteil derselben ist die relativ teure Herstellung der nahtlosen Rohre.

Das Biegen von längsgeschweißten Rohren, bei dem sich die Längsnaht in der Neutralebene befand, damit die Naht und die termisch beeinflußte Zone des Grundmaterials des Rohrs beim Biegen so wenig wie möglich auf Zug oder Druck beansprucht sein würden, hat sich in der Praxis nicht viel verbreitet. Der Grund dafür war die ungleiche Schweißnahtqualität und große Schwankungen der Kerbschlagzähigkeits - und Festigkeitswerte, als Folge des Schweißens und der Warmverformung beim Biegen. Dabei sind die Festigkeitseigenschaften der Schweißverbindung durch die Form und Qualität der Nahtoberfläche beeinflußt. Sofem der Übergang der Nahtoberfläche ins Grundmaterial des Rohrs nicht allmählich und kontinuierlich verläuft, kommt es in der Schweißnaht bei mechanischer Beanspruchung des Rohrs zur bedeutenden, unerwünschten Spannungskonzentration, die das Entstehen von Rissen bzw. Platzen des Materials zur Folge hat. Dabei im Betrieb, wo der Druck des Fördermediums den Wert bis zu 40 Bar erreicht, wird die Längsnaht viel mehr beansprucht, als die Spiralnaht beansprucht sein würde.

Spiralgeschweißte Rohre, die aus Stahlbandrollen mit folgender chemischen Zusammensetzung hergestellt werden: C=0,03 bis 0,25%, Mn= 0,5 bis 1,7%, Ni= 0 bis 0,5%, Si= 0,2 bis 0,7%, Al= 0,001 bis 0,035%, P=0,0 bis 0,03%, S= 0,0 bis 0,035%, Cr=0 bis 0,25%, Mo= 0 bis 0,1%, V= 0 bis 0,08%, Nb= 0 bis 0,05%, Ti= 0 bis 0,06%, wobei der Gehalt Cr + Cu + MO max. 0,45% ist und der Gehalt an Nb + Ti + V = max. 0,12% ist, den Rest bildet Eisen und Produktionsverunreinigungen, die mit beidseitiger Stumpfnaht mit Zusatzwerkstoff mit einer chemischen Zusammensetzung von: C=0,04 bis 0,08%, Si = 0,3 bis 0,7 % Mn= 0,9 bis 1,7 %, den Rest bildet Eisen und Produktionsverunreinigungen, verschweißt sind. Diese spiralgeschweißten Rohre wurden bis jetzt nicht in Elektroinduktions- oder anderen Biegemaschinen gebogen, obwohl die Beanspruchung der Spiralnaht im Betrieb durch Innenüberdruck des beförderten Mediums wesentlich günstiger ist, als die Beanspruchung bei der Längsnaht wäre. Es wurde früher angenomen, daß die Entstehungsgefahr von Rissen beim Biegen von spiralförmig geschweißten Rohren wesentlich größer ist als bei längsgeschweißten Rohren.

Die oben angeführten Nachteile beseitigt im Wesentlichen das Herstellungsverfahren der Rohrbögen aus geraden, spiralgeschweißten Rohren, die aus Bandstahlrollen mit folgender chemischen Zusammensetzung hergestellt werden: C=0,03 bis 0,25%, Mn= 0,5 bis 1,7%, Ni= 0 bis 0,5%, Si= 0,2 bis 0,7%, Al= 0,001 bis 0,035%, P=0,0 bis 0,03%, S= 0,0 bis 0,035%, Cr=0 bis 0,25%, Mo= 0 bis 0,1%, V= 0 bis 0,08%, Nb= 0 bis 0,05%, Ti= 0 bis 0,06%, wobei der Gehalt Cr + Cu + Mo max. 0,45% ist und der Gehalt ans Nb + Ti + V = max. 0,12% ist, den Rest bildet Eisen und Produktionverunreinigungen, die durch eine beidseitige Stumpfnaht unter Anwendung von Zusatzwerkstoff mit einer chemischen Zusammensetzung von: C=0,04 bis 0,08%, Si = 0,3 bis 0,7 % Mn= 0,9 bis 1,7 %, den Rest bildet Eisen und Produktionsverunreinigungen, verschweißt sind, dessen Wesen darin besteht, daß die Schweißnaht so ausgeführt ist, daß diese die Innen- und/oder Außenoberfläche des Rohrs um max. 2 mm überhöht und die Tangente zu deren Querschnitt an der Übergangsstelle von Schweißnaht ins Grundmaterial des Rohrs mit der Rohroberfläche einen Winkel von max. 45 einschließt, worauf dann das derartig spiralförmig geschweißte Rohr in die Elektroinduktionsbiegemaschine mit Wasserbrause bei einer Rohrverformungstemperatur von T° C gebogen wird, die in dem Überdeckungsfeld der Temperaturintervalle $[A_{C3GM}$ - (30 bis 80] °C und $[A_{C3ZM}$ - (30 bis 80)] °C gewählt wird, wobei $A_{C3GM}$ die Temperatur $A_{C3}$ des Grundstahlmaterials und $A_{C3ZM}$ die Temperatur $A_{C3}$ des Zusatzmaterials ist, wobei $A_{C3}$ durch folgende Beziehung gegeben ist: $A_{C3}$= [910 - (203.C) $^{1/2}$-30.Mn + 44,7 Si] °C.

Dieses Verfahren ermöglicht das Biegen von spiralgeschweißten Rohren, ohne daß es zum Entstehen von Rissen oder zum Bruch des Materials in der Schweißnaht und in der thermisch beeinflußten Zone entlang der Schweißnaht kommt, bei der Einhaltung der geforderten Festigkeitsparametern, d.h. Streckgrenze $R_e$, Festigkeitsgrenze $R_m$, Kerbschlagzähigkeit KCV und der geforderten max. zulässigen Ovalitätswerte O der Bogensquerschnitten. Die Herstellung dieser Rohrbögen ist wesentlich billiger als die Herstellung von Rohrbögen aus nahtlosen Rohren, die vergleichbare mechanische Eigenschaften aufweisen.

Weiter ist es vorteilhaft, wenn die Schweißnaht an der Innen- und/oder Außenseite der Stumpfnaht mit zwei Schweißraupen ausgeführt ist, wobei die zweite Schweißraupe wenigstens teilweise die erste überdeckt.

Mit diesem Herstellungsverfahren, bei welchem die Stahlrohren bei geringerer eingebrachten Wärme Q geschweißt werden, kommt es zur geringeren thermischen Beeinflussung des Materials in thermisch beeinflußter Zone entlang der Schweißnaht. Dabei die beim Aufschweißen der zweiten Schweißraupe eingebrachte Wärme Q einen dem Glühen nach dem Schweißen ähnlichen Prozeß verursacht, was Spannungssenkung und Bildung einer gleichmäßigen Struktur sowohl in der Schweißnaht als auch in der thermisch beeinflußten Zone entlang der Schweißnaht zur Folge hat.

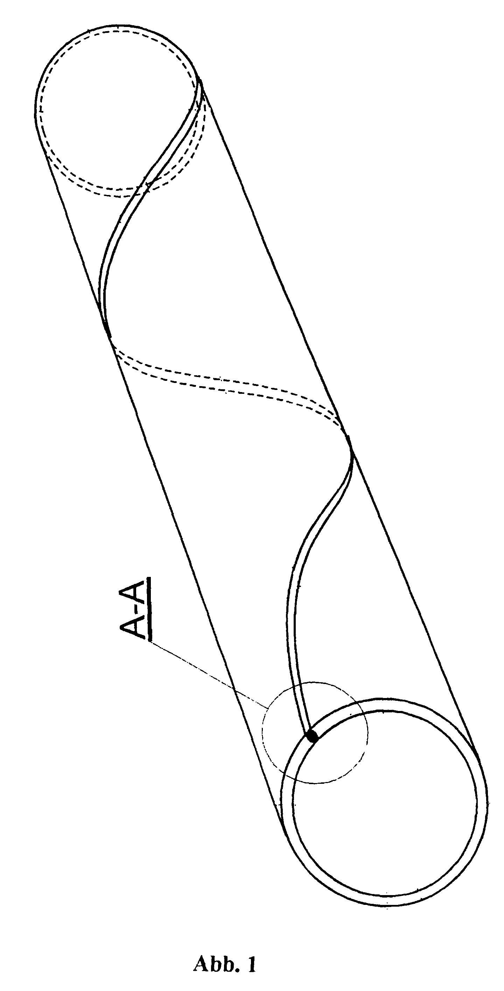

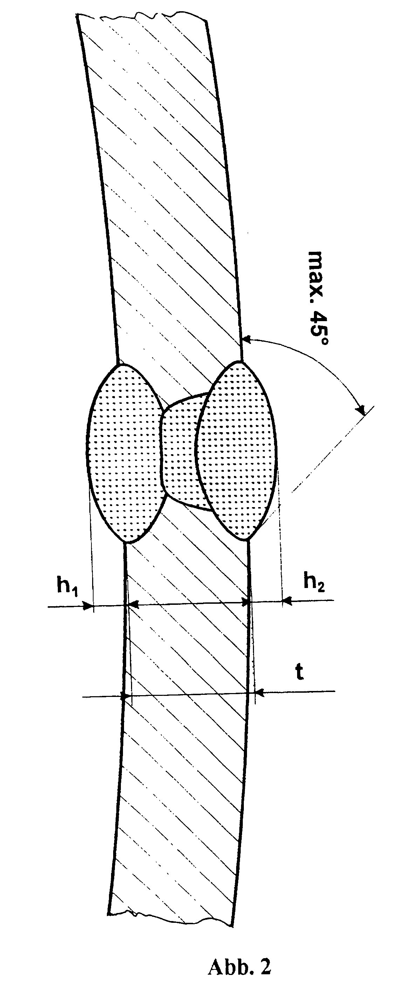

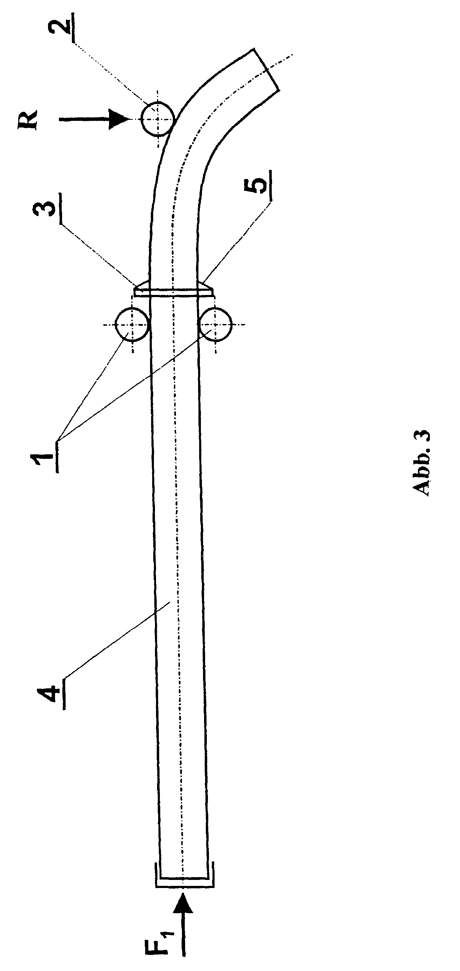

Auf den beigelegten Zeichnungen ist ein Durchführungsbeispiel der Erfindung dargestellt, wobei Abb. 1 die Ansicht auf das gerade, spiralförmig geschweißte Rohr darstellt, Abb. 2 der Schnitt A-A von Abb. 1 darstellet und Abb. 3 stellt schematisch das Biegen des Rohrs in der Elektroinduktionsbiegemaschine mit Wasserbrause dar.

Gerade, spiralförmig geschweißten Rohre, (s. Abb. 1), fertigt man durch Schweißen von Stahlbandrollen mit der Dicke ca. t = 6 bis 10 mm bis zum geforderten Nenndurchmesser D, der sich von 300 bis 700 mm bewegt. Das Schweißen erfolgt durch eine beidseitige Stumpfnaht, derer Querschnitt auf Abb. 2 dargestellt ist. Die Überhöhungen h1, h2 der Schweißnahtoberflächen über die Innere- und/oder Äußereoberflächen des Rohrs dürfen nicht größer als 2 mm sein und die Tangente zum Querschnitt der Schweißnaht an derer Übergangsstelle ins Grundmaterial des Rohres einen Winkel von max. 45° einschließt. Ein derartig hergestelltes Rohr wird danach in der Elektroinduktionsbiegemaschine mit Wasserbrause zum gewünschten Rohrbogen verformt. Wie es aus Abb. 3 ersichtlich ist, wird das gerade, spiralförmig geschweißte Rohr $\underline{4}$ in die Führungsrollen $\underline{1}$ der Biegemaschine eingelegt und in Axialrichtung durch die Kraft F1 mit einer Geschwindigkeit $\underline{v}$ in die Biegerollen $\underline{2}$ verschoben. Die Biegerollen $\underline{2}$ sind je nach gewünschtem Radius des Bogens in Richtung $\underline{R}$ einstellbar. Die Verformung des geraden Rohrs zum Bogen erfolgt im Bereich der Induktionsschleife $\underline{3}$, in dem das Rohr bzw. Rohrmaterial durch Induktionswärme auf die Rohrverformungstemperatur $\underline{T}$ erwärmt wird. Beim Biegen werden die "gedachten Fasern" des Rohrmantels an der Außenseite der Biegung gedehnt und an der Innenseite der Biegung gestaucht. Die Rohrverformungstemperatur $\underline{T}$ hat sowohl einen wesentlichen Einfluß auf die Mechanischen- und Festigkeitseigenschaften, als auch auf die resultierende Ovalität $\underline{O}$ des Rohrbogens. Unmittelbar nach dem Biegen wird das Rohr mit der hinter dem Induktor angebrachten Wasserbrause $\underline{5}$ abgekühlt, damit es nicht zu den unerwünschten Änderungen der mechanischen Materialeigenschaften kommt und damit die geforderten Ovalitätswerte sichergestellt wären.

<u>Beispiel 1</u>

Die Kanten der Stahlbandrolle mit der Dicke 7 mm, mit einer chemischen Zusammensetzung von: C=0,1%, Mn=0,6%, Si=0,3%, Al=0,02%, P=0,03%, S=0,02%, den Rest bildet Eisen und Produktionsverunreinigungen, mit Streckgrenze Re im Bereich von 305 bis 319 MPa, Festigkeitsgrenze Rm im Bereich 405 bis 460 MPa (s. Tab. Nr. 1 - Zeilen 1), werden für die beidseitige Stumpfnaht hergerichtet und mit einem Zusatzwerkstoff mit einer chemischen Zusammensetzung von. C=0,06%, Si=0,5%, Mn=1,2%, den Rest bildet Eisen und Produktionsverunreinigungen, mit Automaten zu einem Spiralrohr mit Nenndurchmesser 324 mm verschweißt. Die Außennaht wird durch eine Schweißraupe und die Innennaht durch zwei sich überdeckenden Raupen ausgeführt. Die Werte der Kerbschlagzähigkeit KCV sind in der Tabelle Nr. 3 in der Zeilen 1 angegeben.

Die Schweißnahtüberhöhung auf der Außen- und Innenoberfläche des Rohrs (s. Abb. 2) überschreitet nicht den Wert von 2 mm und die Tangente zu deren Querschnitt an der Stelle des Schweißnahtübergangs ins Grundmaterial des Rohrs schließt mit dessen Oberfläche einen Winkel von 31° ein.

Auf diese Weise hergestelltes Rohr wird in die Elektroinduktionsbiegemaschine mit Wasserbrause (s. Abb. 3) eingelegt und bei der Rohrverformungstemperatur T verformt, die aufgrund der anschließend berechneten Werte laut chemischer Zusammensetzungen des Grundmaterials und Zusatzmaterials gewählt wird:

$$A_{C3GM} = [910-(203\,C)^{1/2} - 30\,Mn + 44{,}7\,Si]°C = 910 - (203 \times 0{,}1)^{1/2} - 30 \times 0{,}6$$
$$+ 44{,}7 \times 0{,}3 = 900{,}9\ °C$$

$$T_{GM} = A_{C3GM} - (30\ bis\ 80)°C = 901 - (30\ bis\ 80)\ °C = 871\ bis\ 821°C$$

$$A_{C3ZM} = [910 - (203C)^{1/2} - 30\,Mn + 44{,}7\,Si]°C = 910 - (203 \times 0{,}06)^{1/2} - 30 \times$$
$$1{,}2 + 44{,}7 \times 0{,}5 = 892{,}9\ °C$$

$$T_{ZM} = A_{C3ZM} - (30\ bis\ 80)°C = 893 - (30\ bis\ 80)\ °C = 863\ bis\ 813°C$$

Dabei

$A_{C3GM}$ die Temperatur $A_{C3}$ des Grundstahlmaterials und

$A_{C3ZM}$ die Temperatur $A_{C3}$ des Zusatzmaterials bedeuten, wobei

$A_{C3}$ durch folgende Beziehung gegeben ist :

$$A_{C3} = 910 - (203C)^{1/2} - 30 \, Mn + 44{,}7 \, Si \qquad [^\circ \, C]$$

$T_{GM}$ = Intervall der Grundmaterialverformungstemperatur und

$T_{ZM}$ = Intervall der Zusatzwerkstoftsverformungstemparatur bedeuten.

Aus den derartig berechneten Intervallen der Grundmaterialsverformungstemperatur $T_{ZM}$ und des Zustazwerkstoffsverformungstemperatur $T_{PM}$ wird die Rohrverformungstemperatur im Überdeckungsfeld der Intervalle $T_{ZM}$ und $T_{PM}$ gewählt, die 863 bis 821°C beträgt, z.B. T=840°C.

Nach dem Biegen dieses Rohrs bei der oben angeführten Rohrverformungstemperatur T=840°C zum Bogen von 90°, hatte das Rohr bei einem Biegeradius vom R= 6D = 6 x 324 = 1994 mm, die in Tabelle Nr. 2 und 4 auf den Zeilen 1 angeführten mechanischen Eigenschaften und die Ovalität O, die in der Tabelle Nr. 5, Zeile 1, angeführt ist. Durch gegenseitigen Vergleich der Zeilen 1 in den Tabellen Nr. 1 bis Nr. 5 stellte man fest, daß der Rohrbogen eine leicht erhöhte Streckgrenze Re und Festigkeitsgrenze Rm aufwies, weiterhin ein nur leicht erhöhtes Verhältnis Re/Rm und eine leicht verringerte Dehnbarkeit A5 und etwas erhöhte Werte der Kerbschlagzähigkeit in der Naht und in der thermisch beeinflußten Zone. Die Ovalität O des Rohrbogenquerschnitts beträgt 5,3% in der Mitte des Bogens und 1,8% an den Randzonen des Bogens (s. Tab. 5), was den geforderten Werten entspricht.

Der unter diesen definierten Bedingungen hergestellte Bogen entspricht den, am mit einem Innenüberdruck von 40 Bar beanspruchten Rohrbogen geforderten Parametern, d.h. Streckgrenze Re = min. 240 MPa, Festigkeitsgrenze Rm - 370 bis 490 MPa, Verhältnis Re/Rm = max. 0,85, Dehnbarkeit A5 - min. 24%, Kerbschlagzähigkeit KCV 0° min.24 J/cm$^2$ laut Messstelle und Ovalität O in der Mitte des Rohrbogens max. 6% und an den Randzonen des Bogens max. 3%.

Beispiel 2

Ein vollständig auf die gleiche Weise wie beim vorherigen Beispiel 1 hergestelltes Rohr aus dem gleichen Materialien und mit den gleichen mechanischen Eigenschaften vor dem Biegen (s.Tab. 1), wurde ebenfalls zu einem Bogen 90° mit Biegeradius R = 6D gebogen, jedoch bei gewählter Rohrverformungstemperatur T = 760°C, die ca. 50 bis 60° C unter der unteren Grenze des durch die Erfindung festgelegten Bereich der Rohrverformungstemperatur liegt. Nach dem Biegen wies der Rohrbogen die in den Tab. Nr. 2 und Nr. 4 in den Zeilen 2 angeführten Mechanischen- und Festigkeitseigenschaften auf. Bei deren Vergleich mit den Mechanischen- und Festigkeitseigenschaften vor dem Biegen (s. Tab. Nr. 1 und Nr. 3, Zeilen 2) stellte man fest, daß sich die Werte nicht wesentlich verändert haben und daß das Rohr den Festigkeitsanforderungen entsprach. Die Ovalität in der Mitte des Rohrbogens entsprach den Anforderungen jedoch nicht, denn diese 13,6 % erreichte, anstelle der geforderten max. 6%.

Beispiel 3

Ein auf die gleiche Weise hergestelltes Rohr, mit den gleichen mechanischen Eigenschaften vor dem Biegen, wie bei den vorherigen Beispielen 1 und 2 (s. Tab. Nr. 1), wurde ebenfalls zum Bogen 90° mit Biegeradius R = 6D gebogen, jedoch bei gewählter Rohrverformungstemperatur T = 920°C, die ca. 50 bis 60° C über die obere Grenze des durch die Erfindung festgelegten Bereichs der Rohrverformungstemperatur lag.
In diesem Fall kam es im Verlauf des Biegens zum Platzen der Bogenwand in dem Bereich der gezogenen Fasern, denn infolge der Überschreitung der durch die Erfindung festgelegte Rohrverformungstemperatur T, kam es zur Grobkombildung des Materials bei gleichzeitig bedeutender Erhöhung der Streckgrenze Re und wesentlicher Verringerung der Dehnbarkeit A5 und der Kerbschlagzähgkeit KCV (s. Tab. Nr. 1 und Nr. 2, Zeilen 3).

Beispiel 4

Es wurde ein gerades, spiralförmig geschweißtes Rohr aus dem gleichen Material hergestellt und mit dem gleichen Zusatzwerkstoff wie bei den vorherigen Beispielen 1 bis 3 geschweißt, jedoch mit dem Unterschied, daß die Schweißnaht die Rohroberfläche um 3 mm überhöhte und die Tangente zum Innenschweißnahtoberfläche an der Über-gangsstelle zum Grundmaterial mit der Rohroberfläche einen Winkel von 82° umschloß.
Beim Biegen dieses Rohrs bei der Rohrverformungstemperatur T = 840°C, also in einem Bereich, der durch eine der Erfindungsbedingungen gegeben ist, kam es zum Zerreißen der Wand des Rohrbogens in dem Bereich der gezogenen Faser, wobei die Initialisierung des Risses sich an der Übergangsstelle der Naht ins Grundmaterial befand. Zum Zerreißen der Bogenwand kam es infolge der Nichteinhaltung der weiteren, durch die Erfindung festgelegten Bedingungen und zwar wegen der Überhöhung der Innenschweißnaht über die Rohroberfläche um mehr als 2 mm und wegen der Überschreitung des maximalen Wertes des Übergangswinkels der Schweißnahtoberfläche ins Rohroberfläche.

Wie aus den Tabellen Nr. 2 und Nr. 4 , Zeilen 4, ersichtlich ist, weisen die Festigkeits- und Plastizitätseigenschaften des Rohrs nach dem Biegen im Vergleich mit den gleichen Eigenschaften vor dem Biegen (s. Tabellen Nr. 1 und Nr. 2.) keine signifikanten Abweichungen auf.

Tab. Nr 1.

| Beispiel | Meßstelle | Mechanische Eigenschaften vor dem Biegen | | | |
|---|---|---|---|---|---|
| | | Re [MPa] | Rm [MPa] | Re/Rm | $A_5$[%] |
| 1 | Senkrecht zur Rohrachse | 309 | 414 | 0,75 | 32,3 |
| 2 | | 311 | 405 | 0,77 | 32,2 |
| 3 | | 305 | 410 | 0,74 | 31,8 |
| 4 | | 309 | 411 | 0,75 | 33,4 |
| 1 | Parallel zur Rohrachse | 315 | 422 | 0,75 | 27,8 |
| 2 | | 311 | 418 | 0,74 | 29,2 |
| 3 | | 309 | 415 | 0,74 | 27,6 |
| 4 | | 319 | 420 | 0,76 | 29,7 |
| 1 | Schweißnaht | 348 | 458 | 0,76 | 28,3 |
| 2 | | 352 | 452 | 0,78 | 28,9 |
| 3 | | 353 | 459 | 0,77 | 28,8 |
| 4 | | 359 | 460 | 0,78 | 29,1 |

Tab. Nr. 2

| Beispiel | Meßstelle | Mechanische Eigenschaften nach der Biegen | | | |
|---|---|---|---|---|---|
| | | Re[MPa] | Rm[MPa] | Re/Rm | $A_5$[%] |
| 1 | Senkrecht zur Rohrachse | 331 | 434 | 0,76 | 30,0 |
| 2 | | 305 | 425 | 0,72 | 29,5 |
| 3 | | 402 | 467 | 0,86 | 18,8 |
| 4 | | 335 | 434 | 0,77 | 30,2 |
| 1 | Parallel zur Rohrachse | 332 | 420 | 0,80 | 32,8 |
| 2 | | 311 | 418 | 0,74 | 33,7 |
| 3 | | 423 | 481 | 0,88 | 17,3 |
| 4 | | 339 | 430 | 0,78 | 32,6 |
| 1 | Schweißnaht | 352 | 445 | 0,79 | 28,6 |
| 2 | | 358 | 448 | 0,80 | 28,8 |
| 3 | | 454 | 511 | 0,89 | 16,8 |
| 4 | | 344 | 441 | 0,78 | 29,6 |

Tab. Nr. 3

| Beispiel | Meßstelle | Kerbschlagzähigkeit vor dem Biegen |
|---|---|---|
| | | KCV 0°C[J/cm$^2$] |
| 1 | Senkrecht zur Rohrachse | 62 |
| 2 | | 68 |
| 3 | | 89 |
| 4 | | 64 |
| 1 | Mitte der Schweißnaht | 149 |
| 2 | | 138 |
| 3 | | 145 |
| 4 | | 151 |
| 1 | Wärrnebeeinflußte Zone | 203 |
| 2 | | 218 |
| 3 | | 233 |
| 4 | | 211 |

Tab. Nr.4

| Beispiel | Meßstelle | Kerbschlagzähigkeit nach dem Biegen |
|---|---|---|
| | | KCV 0 °C [J/cm$^2$] |
| 1 | Senkrecht zur Rohrachse | 246 |
| 2 | | 240 |
| 3 | | 84 |
| 4 | | 245 |
| 1 | Mitte der Schweißnaht | 242 |
| 2 | | 239 |
| 3 | | 41 |
| 4 | | 245 |
| 1 | Wärmebeeinflußte Zone | 252 |
| 2 | | 256 |
| 3 | | 24 |
| 4 | | 253 |

Tab. Nr. 5

| Beispiel | Ovalität /%/ | |
|---|---|---|
| | in der Bogenmitte (max. 6%) | am Rand des Bogens (max. 2%) |
| 1 | 5,3 | 1,8 |
| 2 | 13,6 | 4,9 |
| 3 | 5,2 | 1,7 |
| 4 | 5,6 | 1,9 |

Das Herstellungsverfahren von Rohrbögen aus geraden, spiralförmig geschweißten Rohren, kann bei der Herstellung der Rohrbögen mit Nenndurchmessern von 300 bis 700 mm, Wanddicke von 6 bis 10 mm, für die Erdgasfernleitungen verwendet werden. Die Anwendung dieses Verfahrens ist auch für die Herstellung von Rohrbögen für andere Energetische- oder Industrieleitungen anwendbar.

**Patentansprüche**

1.   Herstellungsverfahren von Rohrbögen aus geraden, spiralförmig geschweißten Rohren (4), die aus der Stahlbandrollen hergestellt werden, mit einer chemischen Zusammensetzung: C = 0,03 bis 0,25 %, Mn = 0,5 bis 1,7 %, Ni = 0 bis 0,5 %, Si=0,2 bis 0,7%, Al = 0,001 bis 0,035 %, P = 0,0 bis 0,03 %, S = 0,0 bis 0,035 %, Cr = 0 bis 0,25 % Mo = 0 bis 0,1%, V = 0 bis 0,08 %, Nb = 0 bis 0,05 %, Ti = 0 bis 0,06 %, wobei der Gehalt an Cr + Cu + Mo max. bei 0,45 % und der Gehalt von Nb + Ti + V max. bei 0,12 % liegt, den Rest bildet Fe und Produktionsverunreinigungen, die durch eine beidseitige Stumpfnaht aus Zusatzswerkstoff mit einer chemischen Zusammensetzung: C = 0,04 bis 0,08 %, Si = 0,3 bis 0,7 %, Mn = 0,9 bis 1,7 %, den Rest bildet Fe und Produktionsverunreinigungen verschweißt sind, **dadurch gekennzeichnet, daß** die Schweißnaht so ausgeführt ist, daß diese Innen- und/oder Außenoberfläche des Rohrs (4) um max. 2 mm überhöht und die Tangente zu deren Querschnitt an der Übergangsstelle von Schweißnaht ins Grundmaterial des Rohrs (4) mit der Rohroberfläche einen Winkel von max. 45° einschließt, worauf das derartig spiralförmig geschweißte Rohr (4) in der Elektroinduktionsbiegemaschine mit Wasserbrause (5) bei einer Rohrverformungstemperatur T gebogen wird, die in dem Überdeckungsfeld der Temperaturintervalle $T_{GM} = [A_{C3GM} - (30$ bis $80$ ° C)] und $T_{ZM} = [A_{C3ZM} - (30$ bis $80$ °C)] gewählt wird, wobei

$A_{C3GM}$ die Temperatur $A_{C3}$ des Grundstahlmaterials und

$A_{C3ZM}$ die Temperatur $A_{c3}$ des Zusatzmaterials bedeutet, wobei

$A_{C3}$ durch folgende Beziehung gegeben ist :

$$A_{C3} = 910 - (203C)^{1/2} - 30 \, Mn + 44,7 \, Si \qquad [° \, C]$$

2.   Herstellungsverfahren von Rohrbögen laut Anspruch 1, **dadurch gekennzeichnet, daß** die Schweißnaht an der Innen- und/oder Außenseite der Stumpfnaht mit zwei Schweißraupen ausgeführt wird, wobei die zweite Schweißraupe wenigstens teilweise die erste Schweißraupe überdeckt.

**Claims**

1.   Method for producing pipe bends from the straight spirally welded pipes (4) made from the steel band rolls of the chemical composition including: C = 0,03 to 0,25 %, Mn = 0,5 to 1,7 %, Ni = 0 to 0,5 %, Si = 0,2 to 0,7 %, Al = 0,001 to 0,035 %, P = 0 to 0,03 %,
S = 0 to 0,035 %, Cr = 0 to 0,25 %, Mo = 0 to 0,1 %, V = 0 to 0,08 %, Nb = 0 to 0,05 %, Ti = 0 to 0,06 %, where the content of Cr + Cu + Mo= max. 0,45 % and the content of Nb + Ti +V = max. 0,12 %, the remainder consisting of Fe and the producing impurities, which are welded together by a double-sided butt seam of a filler material of the chemical composition as follows : C = 0,04 to 0,08 %, Si = 0,3 to 0,7 %, Mn = 0,9 to 1,7 %, the remainder consists of Fe and the production impurities, **characterised in that** the welding seam is manufactured in such a way that it does not exceed the inner and/or outer surface of the pipe (4) by more than 2 mm, and tangent with its cross -section at the transition point between the welding seam and the base material of the pipe (4) forms an angle of 45° max. with the pipe surface after which so spirally welded pipe (4) is bent in the electro-induction bending machine with a water spray (5) at a pipe deforming temperature T which is selected in the superposition of the temperature intervals
$T_{GM} = [A_{C3GM} - ( 30$ to $80$ °C ) ] and $T_{YM} = [A_{C3ZM} - ( 30$ to $80$ °C ) ], where:

$A_{C3GM}$ is the temperature $A_{C3}$ of the base steel material and
$A_{C3ZM}$ is the temperature $A_{C3}$ of the filling material, where
$A_{C3}$ is defined by the equation as follows:

$$A_{C3} = 910 - (203 \cdot C)^{1/2} - 30.Mn + 44,7. \, Si \qquad [\,^\circ C\,]$$

**2.** A method for producing the pipe bends as claimed in claim 1, **characterised in that** the welding seam on the inner and/ or outer surface is carried out with two weld beads whereby the second weld bead overlaps at least partially the first one.

**Revendications**

**1.** Procédé de production de coudes de tuyau à partir de tuyaux droits soudés en spire (4), qui sont fabriqués de rouleaux de ruban d'acier ayant une composition chimique: C = 0,03 à 0,25%, Mn = 0,5 à 1,7%, Ni = 0 à 0,5%, Si = 0,2 à 0,7%, Al = 0,001 à 0,035%, P = 0,0 à 0,03%, S = 0,0 à 0,035%, Cr = 0 à 0,25%, Mo = 0 à 0,1%, V = 0 à 0,08%, Nb = 0 à 0,05%, Ti = 0 à 0,06%, dans laquelle la teneur en Cr + Cu + Mo est 0,45% au maximum et la teneur en Nb + Ti + V est 0,12% au maximum, le reste étant formé par du fer et des impurétés de fabrication, lesquels sont soudés bout à bout, des deux côtés, à l'aide d'un métal d'apport ayant une composition chimique: C = 0,04 à 0,08%, Si = 0,3 à 0,7%, Mn = 0,9 à 1,7%, le reste étant formé par du fer et des impurétés de fabrication, **caractérisé en ce que** la soudure est réalisée de façon que cette surface intérieure et/ou extérieure du tuyau (4) soit surélévée de 2 mm au maximum et la tangente à la section transversale de celle-ci, sur l'endroit de transition de la soudure à la matière de base du tuyau (4), forme un angle de 45° au maximum avec la surface du tuyau, après quoi le tuyau ainsi soudé en spire (4) est coudé dans la cintreuse par induction électrique avec douche à l'eau (5), à une température de déformation de tuyau T qui est selectionnée dans la plage de recouvrement des intervalles de température $T_{GM} = [A_{C3GM} - (30 \text{ à } 80°C]$ et $T_{ZM} = [AC3ZM - (30 \text{ à } 80°C]$, òu

$A_{C3GM}$ est la température $A_{C3}$ de la matière d'acier de base et

$A_{C3ZM}$ est la température $A_{C3}$ du métal d'apport,

$A_{C3}$ étant définie par la relation suivante:

$$A_{C3} = 910 - (203C)^{1/2} - 30 \, Mn + 44,7 \, Si \qquad [\,^\circ C]$$

**2.** Procédé de production de coudes de tuyau selon la revendication 1, **caractérisé en ce que** la soudure est réalisée, sur la surface intérieure et/ou extérieure de la soudure bout à bout, avec deux chenilles de soudure, la deuxième chenille de soudure couvrant la première chenille de soudure au moins partiellement.

**Abb. 1**

max. 45°

$h_1$

$h_2$

$t$

**Abb. 2**

**Abb. 3**

EP 1 185 386 B1